# EUROPÄISCHE PATENTSCHRIFT

(11) **EP 2 460 843 B1**
(45) Veröffentlichungstag und Bekanntmachung des Hinweises auf die Patenterteilung: **07.02.2018**
(21) Anmeldenummer: 11009511.4
(22) Anmeldetag: 01.12.2011
(51) Int. Cl.: C08J 3/02, C08J 3/09, D01F 2/02, D01F 1/10, D01F 6/18

(54) **Polymerlösungen in ionischen Flüssigkeiten mit verbesserter thermischer und rheologischer Stabilität**
Polymer solutions in ionic liquids with improved thermal and rheological stability
Solutions polymères dans des liquides ioniques ayant une stabilité thermique et rhéologique améliorée

(30) Priorität: 01.12.2010 DE 102010052887
(43) Veröffentlichungstag der Anmeldung: 06.06.2012
(73) Patentinhaber: Thüringisches Institut für Textil- Und Kunststoff- Forschung E.V., 07407 Rudolstadt (DE)
(72) Erfinder: Wendler, Frank, Dr., 07747 Jena (DE); Konkin, Alexander, Dr., 07407 Rudolstadt (DE); Meister, Frank, Dr., 07407 Rudolstadt (DE); Kolbe, Axel, Dr., 07924 Neundorf (DE)
(74) Vertreter: Plate, Jürgen

(56) Entgegenhaltungen:
- DE-A1-102005 017 715
- DE-A1-102005 017 733
- MATHIEU MAZZA ET AL: "Influence of water on the dissolution of cellulose in selected ionic liquids", CELLULOSE, KLUWER ACADEMIC PUBLISHERS, DO, Bd. 16, Nr. 2, 15. Oktober 2008 (2008-10-15), Seiten 207-215, XP019672312, ISSN: 1572-882X
- GERICKE M ET AL: "Rheological Properties of Cellulose/Ionic Liquid Solutions: From Dilute to Concentrated States", BIOMACROMOLECULES, ACS, US, Bd. 10, Nr. 5, 11. Mai 2009 (2009-05-11), Seiten 1188-1194, XP002612553, ISSN: 1525-7797, DOI: 10.1021/BM801430X [gefunden am 2009-04-01]
- SWATLOSKI R P ET AL: "DISSOLUTION OF CELLOSE WITH IONIC LIQUIDS", JOURNAL OF THE AMERICAN CHEMICAL SOCIETY, AMERICAN CHEMICAL SOCIETY, WASHINGTON, DC; US, Bd. 124, 1. Januar 2002 (2002-01-01), XP001166990, ISSN: 0002-7863, DOI: 10.1021/JA025790M
- CARMICHAEL A J ET AL: "COPPER(I) MEDIATED LIVING RADICAL POLYMERISATION IN AN IONIC LIQUID", CHEMICAL COMMUNICATIONS - CHEMCOM; [6015D], ROYAL SOCIETY OF CHEMISTRY, GB, Nr. 14, 1. Januar 2000 (2000-01-01), XP001025631, ISSN: 1359-7345, DOI: 10.1039/B003335I
- Tim Liebert: "Cellulose Solvents - Remarkable History, Bright Future" In: "Cellulose Solvents: For Analysis, Shaping and Chemical Modification", 1. Januar 2010 (2010-01-01), American Chemical Society, Washington, DC, XP55020416, ISSN: 0097-6156 ISBN: 978-0-84-120007-4 Bd. 1033, Seiten 3-54, * Seite 21 - Seite 27 *

## Beschreibung

Die Erfindung betrifft eine thermisch und rheologisch stabilisierte Polymerlösung in ionischen Flüssigkeiten, die damit hergestellten Formkörper sowie deren Verwendung. Dabei wird die verbesserte thermische und rheologische Stabilität der Spinnlösung durch Zugabe von Salzen von Übergangsmetallen verbessert.

Es ist bekannt, dass aus Polymeren und einem geeignetem Lösungsmittel spinnfähige Polymerlösungen hergestellt werden können, die anschließend nach einem Trocken-Nass- oder Nassspinnverfahren verarbeitet werden können.

Bekannte Lösungsmittel und -systeme sind Dimethylacetamid/Lithiumchlorid, Dimethylsulfoxid/Tetrabutylammoniumfluorid, Ammoniak/Cu²⁺, Natronlauge, Harnstoff/Natronlauge, N-Methylmorpholin-N-oxid-Monohydrat (NMMO) und ionische Flüssigkeiten (ILs) (Liebert T. 2010, In: Cellulose Solvents: For Analysis, Shaping and Chemical Modification, Eds. Liebert T., Heinze T., Edgar K., ACS Symposium Series No. 1033 (2010) 3-54).

Besonders die Verformung von Polysacchariden wie beispielsweise Cellulose in NMMO zeichnet sich durch einen geschlossenen Lösungsmittelkreislauf und hervorragende mechanische Faserkennwerte aus. Problematisch ist dabei, dass NMMO als Lösungsmittel erst bei Temperaturen oberhalb von 90°C eingesetzt werden kann. Diese Temperaturen sind nötig, weil das NMMO-Monohydrat erst bei diesen Temperaturen in geschmolzenem Zustand genutzt werden kann. Weiterhin sind hohe Temperaturen notwendig, um die Viskosität konzentrierter Celluloselösungen so weit zu senken, dass sie verformbar sind. Die hohen Temperaturen führen jedoch zu durch Abbau bedingten Verfärbungen des Lösungsmittels und zur Abnahme des Polymerisationsgrades der Cellulose, was sich in verschlechterten Leistungsparametern der hergestellten Fasern und vor allem in einer unakzeptablen Verschlechterung der Wirtschaftlichkeit eines solchen Verfahrens niederschlägt. Die Abbaureaktionen werden beschleunigt durch die Entstehung von Zersetzungsprodukten (z.B. Chromophoren), die mit dem Lösungsmittel weiter reagieren, durch Reaktionen des NMMO mit der Cellulose aber auch durch Korrosion, verursacht durch Verunreinigungen mit Schwermetallionen (Cu⁺, Fe²⁺). Im worst-case-Szenario können autokatalytisch beschleunigte, exotherme Reaktionen ausgelöst werden, die zu Schäden der Anlagen und zu Personenschäden führen können.

Als eine Alternative dazu gewinnen Ionische Flüssigkeiten (IL) seit 10 Jahren zunehmend an Bedeutung da sie teilweise hervorragende Löseeigenschaften für Polymere im allgemeinen und Polysaccharide, insbesondere Cellulose im besonderen aufweisen.

Seit den grundlegenden Arbeiten von Swatloski und Rogers (WO 03/029329) gibt es in der Literatur eine Vielzahl von Patenten, die sich mit dem Lösen von Polymeren wie beispielsweise Cellulose in ionischen Flüssigkeiten und dem Verspinnen dieser Lösungen befassen, u.a. die DE 102004031025. Insbesondere die Imidazoliumsalze, z.B. Allylmethylimidazoliumchlorid, Ethylmethylimidazoliumchlorid oder Butylmethylimidazoliumchlorid wie auch deren Acetate eignen sich zur Herstellung von hochkonzentrierten Spinnlösungen, die bevorzugt Cellulose-Fasern mit verbesserten mechanischen Eigenschaften ergeben.

Thermische Zersetzungsreaktionen der ILs und Reaktionen mit der Cellulose sind ebenfalls bekannt. Als die bei höheren Temperaturen entstehenden Hauptzersetzungsprodukte wurden Imidazole, 1-Methyl- und 1-Ethylimidazol sowie dimere, substituierte Imidazole nachgewiesen [Liebner et al. Holzforschung, 2010, 64, 161-166]. Es wurde zudem gefunden, dass basische Verbindungen mit geradzahligen Kohlenwasserstoffseitenketten die Acidität am C-2 der Imidazolium-IL soweit erhöhen können, dass es zur Reaktion mit den reduzierenden Endgruppen der Cellulose kommen kann. Somit kann sich die Zugabe von basischen Verbindungen nach DE 102005017733 nachteilig auf die Stabilität von Celluloselösungen auswirken.

Die Stabilisierung von Polysaccharid/IL-Lösungen ist daher Gegenstand der Forschung.

Einige Arbeitsgruppen arbeiten mit der Stabilisierung, die für Lösungen von Cellulose in NMMO her bekannt sind. Dies betrifft die Zugabe von einer oder mehreren Substanzen, die den pH-Wert stabilisieren und gefährlichen Reaktionen von Zersetzungsprodukten entgegenwirken. In der EP 0670917 wird vorgeschlagen, die Spinnlösung dadurch zu stabilisieren, dass man einen oder mehrere Stabilisatoren der Spinnlösung zugibt, die insgesamt antioxidativ auf die Cellulose und ausreichend basisch wirken. Mittels zugesetztem Gallussäurepropylester (GPE) werden Metallionen, z. B. Cu⁺ oder Fe²⁺, Radikalionen wie das vom NMMO abgeleitete Aminylradikal oder kurzlebige reaktive Zwischenprodukte inaktiviert. Der GPE wirkt nach der AT-B 393 841 somit als Antioxidans, jedoch bewirkt er nach der DD-A-0218104 gleichzeitig eine Verfärbung der NMMO-Celluloselösung, wobei es zur Reaktion mit den oxidierbaren Endgruppen der Cellulose kommen kann. Dies ist ein wesentlicher Nachteil der Stabilisierung durch Zugabe von Gallussäurepropylester. Zu hohe Basenkonzentrationen bedingen bei längerer thermischer Belastung einen Abbau der Cellulose (EP 0670917), der zeitlich verzögert einsetzt.

In der DE 102005017715 werden zur Verbesserung der Löseeigenschaften von Cellulose ILs bzw. binäre ILs verwendet, von denen mindestens ein Kation in protonierter Form vorliegen soll. Obwohl bei einem solchen Arbeiten die Aufarbeitung/Abtrennung der IL durch die Zugabe einer Base erleichtert wird, ist zur Erreichung der protonierten Form des Kations ein zusätzlicher Arbeitsaufwand notwendig, damit der Protonentransfer durch starke Säuren begünstigt wird (Greaves T.L., Drummond C.J. 2008, Protic Ionic Liquids: Properties and Applications. Chem. Rev. 108, 206-237). Außerdem ist bekannt, dass die Absenkung des pH-Wertes sich negativ auf den Polymerisationsgrad der Cellulose auswirkt (Klemm D., Philipp B., Heinze T., Heinze U., Wagenknecht W. 1998, Comprehensive Cellulose Chemistry. Wiley, Weinheim).

Auch Mischungen von ionischen Flüssigkeiten mit anderen organischen Verdünnungsmitteln wurden in jüngerer Zeit zur Verbesserung des Lösungszustandes von Polymeren, insbesondere Polysacchariden untersucht. So beschreibt DE 102005017733 die Verwendung einer ionischen Flüssigkeit mit 6 bis 30 Gew.-% einer stickstoffhaltigen Base, z. B. Imidazol. Ergebnis war die erhöhte Lösungsgeschwindigkeit, eine niedrigere Viskosität und die Herabsetzung der Schmelztemperatur von ionischen Flüssigkeiten, die unterhalb 100°C kondensiert vorliegen. Es werden weder Aussagen zur thermischen Stabilität noch zum rheologischen Verhalten der Celluloselösungen gemacht. Nachteil ist in jedem Fall, dass hohe Konzentrationen an basischen Zusätzen notwendig sind. Sowohl in der DE 102005017715 als auch in der DE 102005017733 werden metallische Kationen als mögliche Komponenten der ionischen Flüssigkeiten angegeben. Die eingesetzten ILs können in einer besonderen Ausführungsform auch Metallkationen enthalten, wobei gemäß den in den Patentschriften genannten Formelbildern der Mengenanteil der verwendeten Metallsalze im Minimum 20 % beträgt. Damit sind im herzustellenden cellulosischen Formkörper Restgehalte von Metallen nicht auszuschließen, was entweder zu einem höheren Aufarbeitungsaufwand oder zu unerwünschten Nebenwirkungen bei der textilen Faseranwendung führt. Da jedoch die Performance des textilen Formkörpers von der Reinheit bestimmt wird, muss die Verwendung solcher ionischen Flüssigkeiten als problematisch betrachtet werden.

Bisher sind keine sinnvollen Ansätze zur Stabilisierung allgemein von Polymerlösungen und speziell von Polysaccharidlösungen in ionischen Flüssigkeiten aus der Patentliteratur bekannt.

Ausgehend vom diesem Stand der Technik, lag der Erfindung dementsprechend die Aufgabe zugrunde, Polymerlösungen zu entwickeln, welche sich durch eine erhöhte thermische und rheologische Stabilität auszeichnen und zur Ausspinnung verbesserter Formkörperqualitäten führen.

Diese Aufgabe wird erfindungsgemäß dadurch gelöst, dass man einer Polymerlösung, die durch Lösen von Polymeren, wobei die Polymere Cellulose oder deren faserbildende Derivate sind, in einer ionischen Flüssigkeit oder einer Mischung von ionischer Flüssigkeit (Ionic Liquid, IL) und einem Nichtlösungsmittel für die Polymere, nämlich Wasser, hergestellt wird, ein anorganisches Salz eines Übergangsmetalls zusetzt. Als besonders geeignet haben sich beispielsweise Cu-, Co-, Ni-, Mn-, Zn- oder Ag-Kationen erwiesen. Das Salz wird in fester Form der Spinnlösung zugegeben und sollte auch im Nichtlösemittel lösbar sein. Der Anteil des Nichtlösemittels, d.h. des Wassers, beträgt allgemein bis zu 5 Gew.-%, bevorzugt 1 bis 4 Gew.-%, bezogen auf das Gesamtgewicht der fertigen Polymerlösung. Eine wichtige Eigenschaft dieses Salzes ist, dass es auch in geringen Mengen zu einer sofortigen Komplexbildung sowohl mit der ionischen Flüssigkeit als auch mit dem Polymer, insbesondere mit der Cellulose, führt. Die Polymerlösung enthält zur Einstellung der Viskosität und zur Erhöhung der thermischen und reologischen Stabilität mindestens eine komplexbildende Übergangsmetallverbindung in einer Konzentration von 0,01 bis 1 Gew.-%, bezogen auf das Gewicht der Polymere. Als besonders vorteilhaft haben sich Konzentrationen dieser Salzverbindungen von 0,05 bis 0,2 Gew.-%, bezogen auf das Gewicht der Polymere, erwiesen.

Gegenstand der Erfindung ist demgemäß eine Polymerlösung, umfassend ein Polymer und eine IL als Lösungsmittel, der Salzverbindungen von Übergangsmetallen, beispielsweise Cu-, Co-, Ni-, Mn-, Zn- oder Ag-Kationen, in geringen Konzentrationen zugesetzt werden, welche die Lösequalität, insbesondere die thermische und rheologische Stabilität der Lösung verbessern. Der Zusatz der Salzverbindungen kann auch genutzt werden, um gleichmäßige stabile Spinnbedingungen einzustellen.

Überraschenderweise zeigt sich, dass für den verbesserten Zustand der Lösung die Zugabe geringer Mengen der Salzverbindung ausreichend ist und dass die Salzverbindungen sofort Komplexe bilden mit dem Lösungsmittel wie auch mit dem Polymer, speziell mit der Cellulose.

Lösungen der genannten Polymere in einer geeigneten ionischen Flüssigkeit (IL) zeigen bei Zugabe einer komplexbildenden Salzverbindung eines Übergangsmetalls einen sehr guten Lösungszustand, verbunden mit einer erhöhten Viskosität im Vergleich zu einer nicht stabilisierten Lösung. Erhöhte Relaxationszeiten deuten auf einen rheologisch stabileren Lösezustand hin. Die direkten Wechselwirkungen des Lösungsmittels mit den Cellulosemolekülen werden durch die Übergangsmetalle verändert. Dadurch ist es möglich die Viskosität der Lösung zu variieren, was bisher nur über den Wechsel der ionischen Flüssigkeit (Art des Kations bzw. Anions) und der Einstellung der Spinntemperatur gelang. Dadurch kann man zusätzlich zur thermischen Stabilisierung gleichbleibende, stabile Spinnbedingungen einstellen.

Weiterhin konnte überraschenderweise gefunden werden, dass derartige Celluloselösungen eine höhere thermische Stabilität besitzen, was sich in der Erhöhung der Temperatur zeigt, ab der Anzeichen einer beginnenden Zersetzung zu beobachten sind. Auch der Abbau der Cellulose und des Lösungsmittels wird effektiv unterbunden. Die thermische Langzeitstabilität ist ebenfalls verbessert.

Unter Nutzung der erhöhten thermischen Stabilität können zusätzlich reaktive Additive, wie Ruß, Aktivkohle, Zeolithe, schwermetallhaltige Keramiken oder polymere Verbindungen, in Konzentrationen von 0,1 bis 98 Gew.-%, vorzugsweise 10 bis 30 Gew.-%, bezogen auf die Cellulose, sehr schonend in die Form- und Spinnlösung eingearbeitet werden und verleihen damit den Formkörpern entsprechende funktionelle Eigenschaften.

Ein weiteres Merkmal beim erfindungsgemäßen Vorgehen ist, dass sich beispielsweise aus diesen Polymerlösungen hergestellten Fasern durch eine sehr gute Reißfestigkeit und eine erhöhte Dehnung auszeichnen. Die Formgebung wird durch die Komplexbildung von Metallion/Lösungsmittel/Cellulose über Wasserstoffbrückenbindungen während der Herstellung der Lösung begünstigt.

Bei der Herstellung der erfindungsgemäßen Polymerlösung kann die Temperatur während des Verformungsprozesses abgesenkt werden. So können die Löse-, Lager- und Spinntemperaturen der Celluloselösung bei Temperaturen unter 110 °C, bevorzugt unter 90 °C, besonders bevorzugt im Bereich von 45 bis 80°C, liegen. Ein Folgeeffekt ist die geringere thermische Belastung des Lösungsmittels, was einen geringeren Abbau des Lösungsmittels und der Cellulose nach sich zieht.

Auch zeigte sich überraschenderweise, dass die Übergangsmetalle nicht fest in der Cellulosematrix eingebunden sind und Metallgehalte im erhaltenen Formkörper nach Anwendung typischerweise genutzter Waschmodule nur noch in Spuren nachgewiesen werden können.

Ionische Flüssigkeiten im Sinne der vorliegenden Erfindung sind Salze, die aus einem organischen Kation und einem anorganischen oder organischen Anion bestehen. Das Kation kann ein oder mehrere Stickstoff-, Sauerstoff-, Schwefel- oder Phosphoratome enthalten. Bevorzugt sind quartäre Ammonium- und Phosphoniumverbindungen oder Imidazolium- und Pyridiniumverbindungen. Weiterhin bevorzugt sind organische Substituenten, die sowohl am Kohlenstoffatom als auch am Heteroatom gebunden sind, insbesondere aus der Reihe der Alkyl- und Allylverbindungen. Ungeeignet sind metallische Kationen, wie sie in den DE 102005017715 und DE 102005017733 als mögliche Komponenten der ionischen Flüssigkeiten angegeben werden, da im herzustellenden Formkörper immer Restgehalte beider Komponenten enthalten sind. In der vorliegenden Erfindung wird die metallische komplexbildende Verbindung im unteren Prozentbereich dazugegeben, um diese Restkonzentrationen zu vermeiden.

Als Anionen eignen sich bevorzugt Halogene, wie Chlorid, Bromid, Fluorid, Pseudohalogene oder Carboxylate, z.B. Acetate.

Die ionischen Flüssigkeiten besitzen vorzugsweise Schmelzpunkte unterhalb von 180°C, besonders bevorzugt liegt der Schmelzpunkt im Bereich von -50 bis 120°C.

Somit sind bevorzugte ionische Flüssigkeiten Allylmethylimidazoliumchlorid, Ethylmethylimidazoliumchlorid, Butylmethylimidazoliumchlorid und deren Acetate.

Erfindungsgemäß geeignete Polymere sind Cellulose sowie deren faserbildende Derivate, die durch Nass- bzw. Trocken-Nass-Spinnverfahren verformbar sind.

Geeignete Zellstoffe besitzen durchschnittliche Polymerisationsgrade (DP) von 250 bis 1200, wobei ein DP von 450 bis 650 besonders bevorzugt ist.

Die Polymerlösungen können zu Formkörpern, wie Fasern, Vliesen, Folien, Perlen, Flitter oder Schäumen verformt werden.
Vorzugsweise können Metallsalze der Elemente V, Cr, Mn, Fe, Co, Ni, Cu, Zn oder Ag, am meisten bevorzugt Cu, verwendet werden. Als Anionen der zugesetzten Salze können SO₄²⁻, Cl⁻, CH₃COO⁻, PO₄³⁻ oder NO₃⁻, meist bevorzugt SO₄²⁻ und CH₃COO⁻ genutzt werden. Ebenso können erfindungsgemäß auch Komplexe der beispielhaft aufgeführten Elemente mit folgenden Liganden eingesetzt werden, wie z. B. NH₃, Ethylendiamin, Nitrilotriessigsäure, Ethylendiamintetraessigsäure.

An den nachfolgend aufgeführten Beispielen wird die Erfindung näher beschrieben. Prozente sind darin Gewichtsprozente, soweit nicht anders angegeben oder aus dem Zusammenhang unmittelbar ersichtlich. Die angewandten Prüfmethoden zur Beurteilung der Stabilität der Cellulloselösungen werden im Folgenden erläutert.

### Prüfmethoden zur Beurteilung der rheologischen und thermischen Stabilität von Spinnlösungen:

### Durchschnittlicher Polymerisationsgrad (DP)

Der durchschnittliche Polymerisationsgrad wurde nach der Cuoxam-Methode mit einem Ubbelohde-Viskosimeter bestimmt.

### Rheologische Untersuchungen

Die Dynamische Viskosität (Nullscherviskosität) wurde mit dem Rheometer "Rheostress 100" mit der Temperiereinrichtung TC 500 der Fa. Haake (Bezugstemperatur 85°C) gemessen. Mittels Oszillationsrheometrie wurden die Deformationskurven zur Ermittlung von Speicher- und Verlustmodul bei mindestens drei Massetemperaturen (60, 85 und 100°C) als Funktion der Winkelgeschwindigkeit aufgenommen. Aus diesen Messungen wurden die Masterkurven des Speicher- und Verlustmoduls, die rheologische Uneinheitlichkeit und die Relaxationszeit berechnet.

### Miniautoklav

Die Prüfungen auf beschleunigte exotherme Zersetzungsreaktionen wurden kalorimetrisch mit dem Sicherheitskalorimeter "RADEX" der Fa. System Technik Deutschland GmbH durchgeführt. In einem verschlossenen Stahlgefäß (Prüfdruck 100 bar, Berstscheibe) wurden 2 g der Form- oder Spinnlösung eingewogen. Die Probe wurde mit einer Heizrate von 0,75 K/min von Raumtemperatur bis auf 300°C aufgeheizt. Zur Beurteilung der Stabilität der Proben wurde die niedrigste Temperatur (Tₒₙₛₑₜ) ermittelt, bei der die zu prüfende Substanz einen signifikanten Druckanstieg dp/dt zeigte.

### Textil-physikalische Faserparameter

Die Feinheit der Fasern wurde nach DIN EN ISO 1973, die Reißfestigkeit und Dehnung nach DIN EN ISO 5079 und die Schlingenreißkraft nach DIN 53843, Teil 2 bestimmt.

### Kupferbestimmung

Der Gehalt an Kupfer in der Faser wurde mittels ICP-OES gemäß DIN EN ISO 11885 nach einem Mikrowellendruckaufschluss bestimmt.

### Eigenschaften der Form- oder Spinnlösungen und der hergestellten Fasern

Die stabilisierende Wirkung der erfindungsgemäßen Stabilisatormischung wird nachfolgend an ausgewählten Beispielen gezeigt.

### Beispiel 1 (Vergleichsbeispiel)

Zur Herstellung einer Spinnmasse mit einem Cellulosegehalt von 20 Masse-% wurden in einem Rührreaktor und 1066,7 g 75%-iges wässriges Ethylmethylimidazoliumacetat (EMIMac) vorgelegt und 214,8 g Fichtenzellstoff mit einer Restfeuchte von 6,9 Masse-% und einem Polymerisationsgrad (DP) von 615 zugegeben. Der Reaktor wurde geschlossen und die Maische 15 Minuten bei Raumtemperatur gerührt und anschließend Vakuum von 30 mbar angelegt. Die Temperatur wurde in Stufen auf 100°C erhöht und anschließend durch eine Spinndüse mit 30 Löchern und einem Düsenlochdurchmesser von 100 µm versponnen. Die Abzugsgeschwindigkeit lag bei 30 m/min. Der multifile Faden wurde durch mehrere Waschbäder geführt zur Auswaschung des EMIMAc.

### Beispiel 2

Die Lösung 2 wurde analog Beispiel 1 hergestellt. Zur Stabilisierung wurden 0,1 Ma.-% CuSO₄, bezogen auf die Cellulose, zugegeben.

Die Untersuchungsergebnisse der Lösungen und Fasern zeigt die folgende Tabelle

| | | **Beispiel 1** | **Beispiel 2 CuSO₄** |
|---|---|---|---|
| Tₒₙₛₑₜ | °C | 177 | 182 |
| Nullscherviskosität bei 85°C | Pa*s | 13.470 | 29.220 |
| Scherrate (cross over) | rad/s | 1, 99 | 2, 32 |
| Speichermodul (cross over) | Pa | 2.803 | 5.308 |
| Plateaumodul | Pa | 24.900 | 27.100 |
| Uneinheitlichkeit (rheologisch) | - | 4,9 | 3,8 |
| Relaxationszeit λₘ bei H*ₘ | S | 2, 9 | 6,2 |
| DP in der Lösung | | 471 | 540 |
| DP in der Faser | | 460 | 530 |
| Faserfeinheit | dtex | 2,17 | 2,31 |
| Reißfestigkeit, kond. | cN/tex | 36,6 | 39,1 |
| Reißdehnung, kond. | % | 11,2 | 15,9 |
| Reißdehnung, nass | % | 11,8 | 16,1 |
| Schlingenreißkraft | cN/tex | 8,76 | 19,3 |
| Nassscheuerzahl | | 30 | 52 |
| Cu-Gehalt in der Faser | mg/kg | - | 6,9 |

Die Onset-Temperatur der erfindungsgemäßen Celluloselösung zeigt einen im Durchschnitt um 5°C höheren Wert als das Vergleichsbeispiel. Die Zugabe von Kupfer wirkt sich positiv auf die thermische Stabilität der Polymerlösung aus, d. h. sowohl das Lösungsmittel als auch die Cellulose neigen weniger zu Zersetzungsreaktionen. Der Cellulose-DP in der Lösung und auch in der Faser ist im Vergleich zum Ausgangs-DP nur um etwa 12% abgesenkt, während die nicht-stabilisierte Lösung eine Abnahme um ca. 25% zeigt. Eine erhöhte thermische Stabilität des Lösungsmittels bietet die Möglichkeit längerer Verweilzeiten der Spinnlösungen bei erhöhten Temperaturen, wie sie unter technischen Bedingungen durchaus auftreten können. Außerdem ist eine mehrfache Verwendung des Lösungsmittels im technischen Kreislaufbetrieb gegeben, wodurch die Effizienz des Prozesses beträchtlich verbessert werden kann.

Dies wird unterstützt durch die rheologischen Messungen. Die Nullscher-Viskosität der erfindungsgemäßen Celluloselösung ist um den Faktor 3 im Vergleich zur unstabilisierten Spinnlösung erhöht. Auch der DP sowohl in der Spinnlösung als auch in der Faser ist signifikant erhöht. Dies deutet auf einen geringeren Abbau der Cellulose während der Lösungsherstellung und des Spinnvorgangs hin. Verbunden mit einer höheren Viskosität zeigen die Werte am "crossover" der Deformationskurven von Speicher- und Verlustmodul einen sehr guten Lösungszustand. Die erhöhte Relaxationszeit deutet auf einen gelartigen Zustand hin.

Die Faserparameter beider Fasern sind vergleichbar und besitzen Werte typischer Lyocell-Fasern. Bei geringfügig abgesenkter Reißfestigkeit zeigt die erfindungsgemäße Fasertype eine höhere Reißdehnung, was für das veränderte Lösungsverhalten spricht. Gleichzeitig zeigt die erfindungsgemäße Fasertype eine geringere Fibrillierneigung, was sich in der erhöhten Nassscheuerzahl ausdrückt. In der erfindungsgemäßen Fasertype ist ein geringer Kupfergehalt nachgewiesen worden, der durch eine Erweiterung der Waschmodule weiter abgesenkt werden kann.

### Beispiel 3

Zur Herstellung einer Polymerlösung mit einem PAN-Homopolymergehalt von 29 % wurden 3550 g 75 %-iges 1-Butyl-3-Methyl-Imidazolium-Nitrat vorgelegt und 1170 g Fichtensulfitzellstoff mit einer Restfeuchte von 6,9 Ma.-% und einem Polymerisationsgrad (DP) von 615 zugegeben. Die Dispersion wurde unter ständigem Rühren und einem Vakuum von 20 mbar auf 95°C erwärmt. Nachdem eine klare Lösung erhalten wurde, überführte man die Polymerlösung in den Vorratsbehälter einer Trocken-Nass-Spinn-Vorrichtung und extrudierte die Lösung durch eine Spinndüse mit einem Lochdurchmesser von 90 µm über einen 5 cm langen Luftspalt in ein wässriges Fällbad. Nach Verlassen des Fällbades wurden die koagulierten Gelfasern zwischen zwei Galetten in Wasserdampf bei 98°C gereckt. Die Reckung erfolgte in verschiedenen Schritten und wird durch das Reckverhältnis bzw. die Nachreckung charakterisiert. Nach Trocknung der Faser bei 100 °C wurden Fasern mit einer Endfeinheit von 2 dtex, einer feinheitsbezogenen Reißfestigkeit von 32,3 cN/tex und einer Dehnung von 10,0 % erhalten.

### Beispiel 4

Einer nach Beispiel 3 hergestellten PAN-Lösung wurde in der Dispergierphase 0,5 % Ma.-% CuNO₃, bezogen auf das eingesetzte PAN, zugegeben und zu einer homogenen Polymerlösung verarbeitet. Die Nullscherviskosität der PAN-Lösung stieg um das 1,5-fache, was zu einer deutlichen Verbesserung der Verspinnbarkeit im Luftspalt führte. Nach Koagulation im wässrigen Spinnbad, Reckung gemäß Beispiel 3 und Trocknung bei 100 °C wurden Fasern mit einer Endfeinheit von 2,1 dtex, einer feinheitsbezogenen Reißfestigkeit von 36,7 cN/tex und einer Dehnung von 10,8 % erhalten.

## Patentansprüche

1. Polymerlösung, in der Polymere gelöst sind in ionischen Flüssigkeiten oder einer Mischung aus ionischen Flüssigkeiten und Nichtlösemittel, wobei die Polymere Cellulose oder deren faserbildende Derivate sind, die durch Nass- oder Trocken-Nass-Spinnverfahren verformbar sind, und wobei das Nichtlösemittel Wasser ist, **dadurch gekennzeichnet, dass** die Polymerlösung zur Einstellung der Viskosität und zur Erhöhung der thermischen und rheologischen Stabilität mindestens eine komplexbildende Übergangsmetallverbindung in einer Konzentration von 0,01 bis 1 Gew.-%, bezogen auf das Gewicht der Polymere, enthält.

2. Polymerlösung nach Anspruch 1, **dadurch gekennzeichnet, dass** die ionischen Flüssigkeiten flüssige Salze mit Schmelztemperaturen unter 120 °C sind, wobei die Kationen bevorzugt organische Kationen sind, die aus der Reihe der quartären Ammonium- und Phosphoniumverbindungen oder Imidazolium- und Pyridiniumverbindungen kommen und deren Substituenten sowohl am Kohlenstoffatom als auch am Heteroatom gebunden sind, und die Anionen bevorzugt Halogene, wie Chlorid, Bromid, Fluorid, Pseudohalogene oder Carboxylate sind.

3. Polymerlösung gemäß Anspruch 1 oder 2, **dadurch gekennzeichnet, dass** sie nur eine ionische Flüssigkeit oder ein Gemisch verschiedener ionischer Flüssigkeiten enthält.

4. Polymerlösung gemäß einem oder mehreren der Ansprüche 1 bis 3, **dadurch gekennzeichnet, dass** die komplexbildende Übergangsmetallverbindung Cu, V, Cr, Mn, Fe, Co, Ni, Zn oder Ag in Form von Salzen enthält.

5. Polymerlösung gemäß einem oder mehreren der Ansprüche 1 bis 4, **dadurch gekennzeichnet, dass** sie die Salzverbindungen der Übergangsmetalle in einer Konzentration von 0,01 Gew.-% bis 1 Gew.-%, bevorzugt 0,05 bis 0,2 %, jeweils bezogen auf das Gewicht der Polymere, enthält.

6. Polymerlösung gemäß einem oder mehreren der Ansprüchen 1 bis 5, **dadurch gekennzeichnet, dass** sie reaktive Additive enthält, bevorzugt Ruß, Aktivkohle, Zeolithe, schwermetallhaltige Keramiken und/oder polymere Verbindungen, in einer Konzentration von 0,1 bis 98 Gew.-%, vorzugsweise 10 bis 30 Gew.-%, jeweils bezogen auf das Gewicht der Polymere.

7. Verfahren zur Herstellung einer Polymerlösung gemäß Ansprüchen 1 bis 6, **dadurch gekennzeichnet, dass** die Temperatur während des Löse-, Lagerungs- und Spinnprozesses unterhalb von 110°C, bevorzugt im Bereich von 45 bis 80°C, gehalten wird.

8. Formkörper hergestellt aus einer Polymerlösung gemäß Ansprüchen 1 bis 6, **dadurch gekennzeichnet, dass** das Polymer in Form von Fasern, Vliesen, Folien, Perlen, Flitter oder Schäumen regeneriert ist.

## Claims

1. Polymer solution in which polymers are dissolved in ionic liquids or a mixture of ionic liquids and non-solvent, wherein the polymers are cellulose or its fibre-forming derivatives which are shapeable by wet or dry-wet spinning processes, and wherein the non-solvent is water, **characterized in that** to adjust its viscosity and to increase its thermal and rheological stability, the polymer solution contains at least one complexing transition metal compound in a concentration of 0.01 to 1 wt%, based on the weight of the polymers.

2. Polymer solution according to Claim 1, **characterized in that** the ionic liquids are liquid salts having melting temperatures below 120 °C, wherein the cations are preferably organic cations which come from the series of quaternary ammonium and phosphonium compounds or imidazolium and pyridinium compounds and whose substituents are attached not only to the carbon atom but also to the hetero atom, and the anions are preferably halogens, such as chloride, bromide, fluoride, pseudohalogens or carboxylates.

3. Polymer solution according to Claim 1 or 2, **characterized in that** it contains but one ionic liquid or a mixture of various ionic liquids.

4. Polymer solution according to one or more of Claims 1 to 3, **characterized in that** the complexing transition metal compound contains Cu, V, Cr, Mn, Fe, Co, Ni, Zn or Ag in the form of salts.

5. Polymer solution according to one or more of Claims 1 to 4, **characterized in that** it contains the salt compounds of the transition metals in a concentration of 0.01 wt% to 1 wt%, preferably 0.05 to 0.2 %, all based on the weight of the polymers.

6. Polymer solution according to one or more of Claims 1 to 5, **characterized in that** it contains reactive additives, preferably carbon black, activated carbon, zeolite, heavy metal-containing ceramics and/or polymeric compounds, in a concentration of 0.1 to 98 wt%, preferably 10 to 30 wt%, all based on the weight of the polymers.

7. Process for preparing a polymer solution according to Claims 1 to 6, **characterized in that** the temperature during the dissolving, storing and spinning process is maintained below 110 °C, preferably in the range of 45 to 80 °C.

8. Shaped article obtained out of a polymer solution according to Claims 1 to 6, **characterized in that** the polymer is regenerated in the form of fibres, fibrous nonwoven webs, self-supporting films/sheetings, beads, tinsel or foams.

## Revendications

1. Solution de polymères, dans laquelle des polymères sont dissous dans des liquides ioniques ou dans un mélange composé de liquides ioniques et d'agents non solvants,
dans laquelle les polymères sont de la cellulose ou des dérivés de celle-ci formant des fibres et sont transformables par des procédés de filage en milieu humide ou en milieu sec et humide
et dans laquelle l'agent non solvant est de l'eau,
**caractérisée en ce que**, pour régler la viscosité et pour augmenter la stabilité thermique et rhéologique, la solution de polymères contient au moins un composé de métaux de transition complexant dans une concentration de 0,01 à 1% en poids, par rapport au poids de polymères.

2. Solution de polymères selon la revendication 1, **caractérisée en ce que** les liquides ioniques sont des sels liquides avec des températures de fusion inférieures à 120 °C, les cations étant de préférence des cations organiques qui proviennent de la série des composés d'ammonium et de phosphonium quaternaires ou des composés d'imidazolium et de pyridinium et leurs substituts étant liés aussi bien à l'atome de carbone qu'à l'hétéroatome, et les anions étant de préférence des halogènes tels que chlorure, bromure, fluorure, pseudo-halogène ou carboxylate.

3. Solution de polymères selon la revendication 1 ou 2, **caractérisée en ce qu'**elle contient seulement un liquide ionique ou un mélange de différents liquides ioniques.

4. Solution de polymères selon une ou plusieurs des revendications 1 à 3, **caractérisée en ce que** le composé de métaux de transition complexant contient du Cu, V, Cr, Mn, Fe, Co, Ni, Zn ou Ag sous forme de sels.

5. Solution de polymères selon une ou plusieurs des revendications 1 à 4, **caractérisée en ce qu'**elle contient les composés de sels des métaux de transition dans une concentration de 0,01 à 1% en poids, de préférence de 0,05 à 0,2 % en poids, à chaque fois par rapport au poids de polymères.

6. Solution de polymères selon une ou plusieurs des revendications 1 à 5, **caractérisée en ce qu'**elle contient des additifs réactifs, de préférence du noir de carbone, du charbon actif, de la zéolithe, des céramiques contenant des métaux lourds et/ou des composés polymères, dans une concentration de 0,1 à 98 % en poids, de préférence de 10 à 30 % en poids, à chaque fois par rapport au poids de polymères.

7. Procédé de fabrication d'une solution de polymères selon les revendications 1 à 6, **caractérisé en ce que** la température pendant les processus de dissolution, dépôt et filage est maintenue inférieure à 110 °C, de préférence entre 45 et 80 °C.

8. Corps façonné fabriqué à partir d'une solution de polymères selon les revendications 1 à 6, **caractérisé en ce que** le polymère est régénéré sous la forme de fibres, non-tissés, feuilles, billes, paillettes ou mousses.
